# EUROPEAN PATENT SPECIFICATION

(11) **EP 1 563 342 B1**
(45) Date of publication and mention of the grant of the patent: **13.12.2006**
(21) Application number: 03759148.4
(22) Date of filing: 29.10.2003
(51) Int. Cl.: G03B 21/54, E04B 9/00

(54) **A PROJECTOR LIFTING DEVICE FOR A CEILING**
PROJEKTORHEBEEINRICHTUNG FÜR EINE DECKE
DISPOSITIF DE LEVAGE DE PROJECTEUR POUR UN PLAFOND

(30) Priority: 19.11.2002 SE 0203406
(43) Date of publication of application: 17.08.2005
(73) Proprietor: SMS Smart Media Solutions AB, 131 06 Nacka (SE)
(72) Inventor: HAMMARGREN, Lars, S-113 51 Stockholm (SE)
(74) Representative: Sundström, Per Olof
(86) International application number: PCT/SE2003/001673
(87) International publication number: WO 2004/046810

(56) References cited:
- EP-A1- 1 156 364
- DE-A1- 4 018 432
- GB-A- 2 369 564
- US-A- 4 750 832
- US-A- 5 366 203
- US-B1- 6 367 757

## Description

The invention relates to a projector lifting device for a ceiling having a panel that can be lowered from the level of the ceiling together with a projector carried by the lifting device, in order to permit the projector to project a picture onto a generally vertical screen.

The invention thus relates to a projector lifting device of the type described in the preamble to claim 1.

In previously known projector lifting devices the ceiling panel is carried by the lifting device of the projector. The lifting device displaces the ceiling panel and the projector between two end positions; a first end position in which the ceiling panel is fitted into the surface of the ceiling, and a second position in which the ceiling panel is situated a predetermined distance below the surface of the ceiling. It is thus usual for the ceiling panel to be somewhat larger than a corresponding opening in the ceiling so that the ceiling panel carried by the lifting device provides overlap sealing around the edge of the opening in the ceiling.

A problem thus arises in that the ceiling panel will not reach exactly the correct level, i.e. the level of the ceiling, so that the surface of the ceiling will not be nice and uniform. Furthermore, scattered light from the space between the ceiling and the load-bearing ceiling structure above it may enter the room. If the ceiling panel sealingly overlaps the edge of the opening in the ceiling for the projector from below, the drive means for the lifting device may also lift the panel too high and damage the ceiling structure.

In lifting devices of the type mentioned, furthermore, scattered light from the projector, for instance, may enter the room through the gap between the edge of the opening in the ceiling and the lowered panel so that the spectators in the room are subjected to disturbing light, noise and heat from the projector and other sources of light, noise and heat above the ceiling.

Examples of such type of projector lifting device are disclosed in US-A-4 750 832, US-A-5 366 203, DE-A-40 18 432, EP-A-1 156 364, US-B1-6 367 757 and GB-A-2 369 564.

The object of the present invention is thus to provide a projector lifting device by means of which the above drawbacks are completely or partially eliminated.

This object is achieved by means of the projection lifting device of the invention.

The projection lifting device of the invention is defined in the appended claim 1.

Further embodiments of the projection lifting device of the invention are defined in the appended claims dependent on claim 1.

In accordance with a currently preferred embodiment the ceiling is provided with a rectangular opening having a ceiling panel the edge of which along three sides overlaps the lower edge of the ceiling, while the remaining edge of the ceiling panel is connected by means of a hinge to the adjacent edge of the opening in the ceiling. A second hinge may also be arranged in the ceiling panel, parallel with said first hinge and spaced therefrom a distance greater than the vertical displacement down from the plane of the ceiling. The ceiling panel thus hardly obstructs the view of spectators sitting behind the projector. The ceiling panel is also pre-stressed towards the lower side of the ceiling by means of springs. A projector lifting device carried by the load-carrying ceiling structure is provided at its lower end with a support element for the projector. The hatch is opened when the support element of the lifting device contacts the ceiling panel. Thanks to the pre-stressing springs, the panel will automatically close when the projector lifting device lifts the support element with the projector. The arrangement of a screening edge along the side edges of the ceiling panel, and possibly the ends of the front edge of the panel, offers screening of the gap between the ceiling panel and the ceiling when the panel is lowered. The rear part of the panel between the hinges forms a screen between the remaining part of the panel and the adjacent edge of the ceiling. The side edges may be divided at the extra hinge and overlap slightly so that the edges can overlap each other when the panel bends around the extra, second hinge. The arrangement in accordance with the invention can easily be integrated in ceiling structures of the type comprising a frame defining rectangular openings screened by corresponding rectangular panels resting on flanges in the frame. The hinges at one edge of the panel for the projector lifting device can thus be attached to this frame by means of riveting, gluing or the like.

Using a simple lifting device in accordance with the invention it is possible to substantially prevent noise, light and heat/cold from entering the room when the projector is being used. Furthermore the ceiling panel always automatically accurately closes the opening when the lifting device is raised. Neither need the vertical movement of the lifting device be particularly accurate since the upper and lower end positions of the projector lifting device are relatively uncritical.

The invention will be described by way of example in the following, with reference to the accompany drawings.
- Figure 1: shows schematically a vertical section through a projector lifting device in accordance with the invention.
- Figure 2: shows schematically the ceiling panel associated with the lifting device, from above.
- Figure 3: shows a view of the ceiling panel as shown in Figure 2, from below.

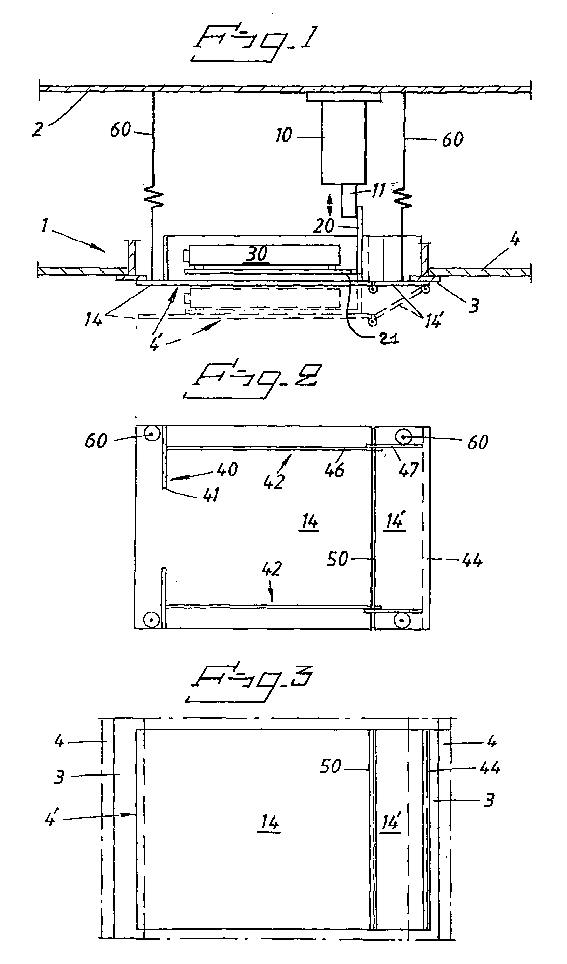

Figure 1 shows schematically a view from below of the panel for the projector lifting device as mounted in a ceiling structure.

Figure 1 shows a ceiling structure 1 suspended from a load-carrying ceiling 2. The ceiling structure consists of a rectangular frame constructed from T-sections in conventional manner. The sections have flanges on which ceiling panels 4 rest. A projector lifting device is suspended from the structure 2 in such a frame opening. The lifting device comprises a linear drive means having a vertically movable part 11 carrying a vertical shaft 20 on a support 21 carrying a projector 30. A special ceiling panel 4' is fitted in the frame opening beneath the projector lifting device. The edges of the panel 4' overlap the lower side of the sections 3.

The panel 4' is provided with a hinge 41 at its rear edge. The hinge extends in the plane of the panel 4, along the adjacent frame element 3 and is attached to this by means of gluing, for instance.

At its front edge the panel 4' is provided on its upper side with an edge 40 extending upwardly from the panel 4' and having an opening 41 for the beam path of the projector 30.

The panel 4' is also divided into a front part 14 and a rear part 14', connected to each other via a hinge 50 situated parallel to the hinge 44 and spaced a distance greater therefrom than the intended displacement of the part 14 from the plane of the ceiling 1.

Edges 42 are provided along the upper side edges of the panel 4'. The edges 42 are formed by two edge portions 46, 47 extending as far as the hinge 50 and overlapping slightly when the panel 4' lies in the plane of the ceiling 1. Springs 60 are fitted to the load-carrying ceiling structure 2 and pre-stress the panel 4' towards its closed position. A pre-stressed spring 60 is suitably placed at each corner of the plate 4'.

It can be seen that activation of the drive means 10 of the lifting device will cause the support element 21 to come into contact with the upper side of the plate 4' and press this downwards. Since the support element 21 has some extension and comes into contact with the front part of the panel 14, this will be parallel displaced so that the panel 4' assumes the position indicated in broken lines in Figure 1. The side edges 42 and front edge 40, as well as the rear part 14' of the panel 4' provide a screen between the lowered part of the panel 14 and the ceiling structure 1 around the projector 30.

When the lifting device 10 is raised to a position above the level of the ceiling structure 1, the springs 60 will return the panel 4' with a predetermined force to a position in which it easily covers the frame opening.

The invention has been illustrated in a particular embodiment in which the ceiling panel 4' is provided with two parallel hinges 50, 44 so that the projector lifting device is visible as little as possible to spectators seated behind the lifting device.

It should be evident, however, that the advantages of the invention are also achieved with a simplified embodiment of the projector lifting device in which the panel 4' sealingly overlaps the sections 3 of the opening all the way round, and the panel 4' is provided with a screening edge so that the edges screen off the gap between the ceiling 1 and the lowered plate 4' around its entire periphery with the exception of the beam path of the projector 30.

It should also be evident that the front edge 40 may normally be dispensed with since the projector light must in any case be able to pass freely forwards towards a projector screen.

## Claims

1. A projection lifting device for a ceiling structure, said ceiling structure comprising a framework (3) suspended from a load-bearing ceiling structure (2) and a plurality of ceiling panels (4) which are supported at the edges by supporting flanges on the framework, in order to cover corresponding openings in the framework, the device comprising a lifting device (10, 20, 21) being carried by the load-bearing ceiling structure (2) and comprising a support element (21) for a projector vertically displaceable, wherein the support element (21) can be moved by the lifting device through an opening in the framework between a lowered position below the ceiling panels (4) and a raised position in which a ceiling panel (4') of said plurality, cooperating with the lifting device covers a corresponding opening of the framework, the ceiling panel having edges that overlap the edges of the framework, **characterised in that** the ceiling panel (4') is pre-stressed upwardly towards a closed position covering said corresponding opening in the framework by pre-stressing springs (60), and **in that** the support element (21) of the lifting device, upon lowering, is arranged to move the ceiling panel (4') against the action of the pre-stressing springs (60).

2. A device as claimed in claim 1, **characterised in that**, on its upper side the ceiling panel (4') has an edge element to screen off the gap appearing between the ceiling and the opening edge when the ceiling panel is lowered, at least along the rear part of the panel in projection direction.

3. A device as claimed in claim 1 or claim 2, **characterised in that** the rear edge of the ceiling panel (4) is connected to the edge of the opening via a first hinge (44) and **in that** the ceiling panel (4) has a second hinge (50) that is parallel with the first hinge (44) and articulately joins two rectangular sections (14', 14) of the ceiling panel (4'), wherein the length of the first section (14'), situated between the hinges (44, 50), is greater than the vertical displacement of the ceiling panel (4') and wherein the surface of support element (21) of the lifting device presses against the other section (14) of the ceiling panel (4) in order to keep this substantially parallel to the plane of the ceiling structure when the ceiling panel (4') in open state, and **in that** the first section of the ceiling panel forms a screening edge between the second part (14) of the ceiling panel and the ceiling structure.

4. A device as claimed in any one of claims 1-3, **characterised in that** the ceiling panel is provided with screening edges (42) along its side edges.

5. A device as claimed in claim 4, **characterised in that** the ceiling panel is provided with a screening edge along the front edge of the ceiling panel (4'), the front screening edge having an opening for the beam path of the projector.

## Patentansprüche

1. Projektorhebeeinrichtung für eine Deckenstruktur, wobei die Deckenstruktur eine von einer tragenden Deckenstruktur (2) hängende Rahmenkonstruktion (3) und eine Mehrzahl von Deckenplatten (4), die an den Kanten durch Stützflansche auf der Rahmenkonstruktion gehalten werden, um die entsprechenden Öffnungen in der Rahmenkonstruktion abzudecken, umfasst und eine durch die tragende Deckenstruktur (2) gehaltene Hebeeinrichtung (10, 20, 21) und vertikal verschiebbare Stützelemente (21) für einen Projektor aufweist, in welcher die Stützelemente (21) durch die Hebeeinrichtung durch eine Öffnung in der Rahmenkonstruktion zwischen einer unteren Stellung unter den Deckenplatten (4) und einer gehobenen Stellung bewegt werden können, in der eine Deckenplatte (4') der Mehrzahl von Deckenplatten (4) zusammen mit der Hebeeinrichtung eine entsprechende Öffnung in der Rahmenkonstruktion abdeckt, wobei die Deckenplatte Kanten aufweist, die die Kanten der Rahmenkonstruktion überlappen, **dadurch gekennzeichnet, dass** die Deckenplatte (4') durch vorspannende Federn (60) nach oben in Bezug auf eine die entsprechende Öffnung in der Rahmenkonstruktion abdeckende geschlossene Stellung vorgespannt ist und dass das Stützelement (21) der Hebeeinrichtung beim Herablassen derart angeordnet ist, um die Deckenplatte (4') gegen die Wirkung der vorspannenden Federn (60) zu bewegen.

2. Einrichtung nach Anspruch 1, **dadurch gekennzeichnet, dass** auf deren Oberseite die Deckenplatte (4') zumindest entlang des hinteren Teilstücks der Platte in Projektionsrichtung ein Kantenelement zum Abschirmen des zwischen der Decke und der Öffnungskante beim Herablassen der Deckenplatte entstehenden Spaltes aufweist.

3. Einrichtung nach Anspruch 1 oder Anspruch 2, **dadurch gekennzeichnet, dass** die hintere Kante der Deckenplatte (4) mit der Kante der Öffnung über ein erstes Gelenk (44) verbunden ist, und dass die Deckenplatte (4) ein zweites Gelenk (50) parallel zum ersten Gelenk (40) aufweist und zwei rechteckige Abschnitte (14', 14) der Deckenplatte (4') miteinander gelenkartig verbindet, wobei die Länge des ersten Teilabschnitts (14'), zwischen den Gelenken (44, 50) größer ist als die vertikale Verschiebung der Deckenplatte (4') und worin die Oberfläche des Stützelementes (21) der Hebeeinrichtung gegen den anderen Abschnitt (14) der Deckenplatte (4) drückt, um diese bei geöffneter Deckenplatte (4') im wesentlichen parallel zur Ebene der Deckenstruktur zu halten, und dass der erste Abschnitt der Deckenplatte zwischen dem zweiten Teilstück (14) der Deckenplatte und der Deckenstruktur eine Abschirmkante bildet.

4. Einrichtung nach irgendeinem der vorherigen Ansprüche 1 bis 3, **dadurch gekennzeichnet, dass** die Deckenplatte entlang der Seitenkanten mit einer Abschirmkante (42) versehen ist.

5. Einrichtung nach Anspruch 4, **dadurch gekennzeichnet, dass** die Dekkenplatte entlang der Vorderkante der Deckenplatte (4') mit einer Abschirmkante versehen ist und daß die vordere Abschirmkante eine Aussparung für den Lichtweg des Projektors aufweist.

## Revendications

1. Dispositif de levage de projecteur pour une structure de plafond, ladite structure de plafond comprenant une ossature (3) suspendue à une structure de plafond porteuse (2) et une pluralité de panneaux de plafond (4) qui est supportée au niveau des bords par des brides de support de l'ossature, afin de recouvrir des ouvertures correspondantes dans l'ossature, le dispositif comprenant un dispositif de levage (10, 20, 21) supporté par la structure de plafond porteuse (2) et comprenant un élément de support (21) pour un projecteur pouvant être déplacé verticalement, dans lequel l'élément de support (21) peut être déplacé par le dispositif de levage à travers une ouverture de l'ossature entre une position abaissée située au-dessous des panneaux de plafond (4) et une position élevée dans laquelle un panneau de plafond (4') de ladite pluralité de panneaux (4) coopérant avec le dispositif de levage recouvre une ouverture correspondante de l'ossature, le panneau de plafond ayant des bords qui chevauchent les bords de l'ossature, **caractérisé en ce que** le panneau de plafond (4') est précontraint vers le haut en direction d'une position fermée recouvrant ladite ouverture correspondante de l'ossature par des ressorts de précontrainte (60) et **en ce que** l'élément de support (21) du dispositif de levage, lorsqu'il est abaissé, est agencé pour déplacer les panneaux de plafond (4') à l'encontre de l'action des ressorts de précontrainte (60) .

2. Dispositif selon la revendication 1, **caractérisé en ce que** le panneau de plafond (4') présente sur son côté supérieur un élément de bord qui permet de masquer l'interstice situé entre le plafond et le bord d'ouverture lorsque le panneau de plafond est abaissé, au moins le long de la partie arrière du panneau dans le sens de la projection.

3. Dispositif selon la revendication 1 ou 2, **caractérisé en ce que** le bord arrière du panneau de plafond (4) est relié au bord de l'ouverture par l'intermédiaire d'une première charnière (44) et **en ce que** le panneau de plafond (4) présente une deuxième charnière (50) qui est parallèle à la première charnière (44) et relie de manière articulée deux sections rectangulaires (14', 14) du panneau de plafond (4'), dans lequel la longueur de la première section (14'), située entre les charnières (44, 50) est supérieure au déplacement vertical du panneau de plafond (4'), et dans lequel la surface de l'élément de support (21) du dispositif de levage est comprimée contre l'autre section (14) du panneau de plafond (4) afin de le maintenir sensiblement parallèle au plan de la structure de plafond lorsque le panneau de plafond (4') se trouve dans l'état ouvert, et **en ce que** la première section du panneau de plafond forme un bord de masquage entre la deuxième partie (14) du panneau de plafond et la structure de plafond.

4. Dispositif selon l'une quelconque des revendications 1 à 3, **caractérisé en ce que** le panneau de plafond est doté de bords de masquage (42) le long de ses bords latéraux.

5. Dispositif selon la revendication 4, **caractérisé en ce que** le panneau de plafond est doté d'un bord de masquage le long du bord avant du panneau de plafond (4'), le bord de masquage avant ayant une ouverture pour la trajectoire de faisceau du projecteur.
